(19) Europäisches Patentamt
European Patent Office
Office européen des brevets

(11) **EP 4 007 923 B1**

(12) **EUROPEAN PATENT SPECIFICATION**

(45) Date of publication and mention
of the grant of the patent:
**01.04.2026 Bulletin 2026/14**

(21) Application number: **20751636.0**

(22) Date of filing: **23.07.2020**

(51) International Patent Classification (IPC):
***G01N 35/10*** *(2006.01)*     ***G01N 35/00*** *(2006.01)*
***B01L 3/02*** *(2006.01)*

(52) Cooperative Patent Classification (CPC):
**G01N 35/1016; B01L 3/0237; G01N 35/00693;
G01N 35/1072;** B01L 2200/0605; B01L 2400/06

(86) International application number:
**PCT/GB2020/051769**

(87) International publication number:
**WO 2021/023968 (11.02.2021 Gazette 2021/06)**

(54) **AN ASPIRATE-DISPENSE APPARATUS AND ASSOCIATED METHODS**

ASPIRAT-ABGABEVORRICHTUNG UND ENSPRECHENDE VERFAHREN

APPAREIL D'ASPIRATION-DISTRIBUTION ET PROCÉDÉS ASSOCIÉS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.08.2019 US 201962882034 P**

(43) Date of publication of application:
**08.06.2022 Bulletin 2022/23**

(73) Proprietor: **LGC Genomics, LLC
Alexandria, MN 56308-3339 (US)**

(72) Inventors:
• **WESTAD, Nathan Luther
Prairie, Minnesota 56361 (US)**
• **HAUG, Andrew Richard
Alexandria, Minnesota 56308 (US)**

(74) Representative: **Potter Clarkson
Chapel Quarter
Mount Street
Nottingham NG1 6HQ (GB)**

(56) References cited:
**US-A1- 2004 020 938     US-A1- 2006 090 576
US-A1- 2012 104 040     US-A1- 2016 273 951**

• **LEE D ET AL: "Development of the pipetting error
sensor", SENSORS AND ACTUATORS B:
CHEMICAL, ELSEVIER BV, NL, vol. 119, no. 1, 24
November 2006 (2006-11-24), pages 150 - 158,
XP027971629, ISSN: 0925-4005, [retrieved on
20061124]**

EP 4 007 923 B1

# Description

## Technical Field

The present disclosure relates to the aspiration and dispensing of fluids and concerns an apparatus and associated methods for controlling the same.

## Background

Existing aspiration-dispense systems rely on time to monitor and control the aspirated or dispensed volume of fluid. Since flow rate varies with pressure, physical characteristics of the conduits, and fluid viscosity (amongst other factors), however, this approach is inaccurate and can result in wasted fluid.

The apparatus and methods disclosed herein may help to address this issue.

<overflow page 1a>

## Summary

The present invention comprises a controller, aspirate-dispense apparatus, method and computer program as defined in the claims. Embodiments that do not fall within the scope of the claims are to be interpreted as examples useful for understanding the invention. According to a first aspect, there is provided a controller configured to control one or more of aspiration and dispensing of a primary fluid by an aspirate-dispense apparatus, the aspirate-dispense apparatus comprising a secondary fluid in working communication with the primary fluid, wherein the controller is configured to:

> receive measurement signalling for a monitored flow parameter of the secondary fluid;
> determine, using calibration data, a volume of aspirated or dispensed primary fluid based on the received measurement signalling, the calibration data defining a relationship between the volume of aspirated or dispensed primary fluid and the monitored flow parameter of the secondary fluid; and
> control the flow of primary or secondary fluid based on the determined volume to aspirate or dispense a specific volume of primary fluid.

The aspirate-dispense apparatus may be configured to aspirate or dispense volumes of primary fluid in the millilitre volume range or below.

US 2016/273951 A1 discloses a method for controlling pipetting operations done by a pipetting device having a system for measuring the flow rate of the liquid suctioned or dispensed and electronics to communicate with a computer. The pipetting device begins the pipetting operation by opening a valve and, at the same time, it begins the acquisition, continuously or at regular intervals, of the flow rate provided by the system described above. By integrating the acquired flow rate values in the time, an electronic circuit determines the suctioned or dispensed volume. As long as the volume of liquid to be collected has not been reached, the pipetting device continues to acquire the flow rate, which is stored, at least sequentially, in a local memory, so as to be able to obtain a curve representative of the flow rate as a function of time, for the suctioned or dispensed liquid. The method is also based on detection of flow rate variations and the moments at which those variations occur. The method includes obtaining a curve of liquid flow rate by the pipette as a function of time, computing the first deviation of the curve, identifying and recording the maximum and minimum values of the first deviation and the moments at which the maximum and minimum values occur, comparing the maximum and minimum values and the moments at which the maximum and minimum values occur with predetermined references for the values and the moments at which they occur, and based on the result of the comparison, providing a validation or error message.

US 2004/020938 A1 discloses a fluid dispensing device, characterised in that it comprises: a dispensing member including: a conduit allowing through a transporting liquid, a valve fixed to one of the ends of said conduit, a dispensing needle arranged at the other end, means for measuring the flow rate of the transporting liquid in the conduit, control means for circulating the said liquid through said conduit in one direction or the other, and electronic means reacting to said measuring means and acting both on said valve and said control means to cause a specific amount of fluid to be sucked into the needle, and then to be restored.

US 2012/104040 A1 discloses an air displacement liquid delivery system including a liquid delivery device, one or more sensors, a control unit, and a pre-programmable computing device, and a method for using the air displacement liquid delivery system. The one or more sensors are capable of obtaining information regarding conditions within and external to the liquid delivery device and sending this information to the control unit and/or the computing device. In turn, the control unit and/or computing device are capable of using this information to calculate one or more properties of gas contained within, and the air external to, the liquid delivery device, and one or more properties of a liquid that it is to be aspirated or dispensed by the liquid delivery device. The system may optimally control the performance of the liquid delivery device based upon any one or more of these calculated properties.

Lee, D. et al. "Development of the pipetting error sensor", Sensors and Actuators B: Chemical, Volume 119, Issue 1, 24 November 2006, Pages 150-158 discloses an air volume flow rate sensor with a resolution of nano-litre per second to monitor the pipetting errors of the polymerase chain reaction (PCR) mixture dispense processes for DNA quantification experiments.

The monitored flow parameter of the secondary fluid comprises a displaced volume of secondary fluid, and the controller is configured to:

determine when the specific volume of primary fluid has been aspirated or dispensed based on the displaced volume of secondary fluid reaching a first predefined threshold; and
terminate the flow of primary or secondary fluid based on said determination.

The controller may be configured to:

determine a sudden change in the monitored flow parameter of the secondary fluid, or a measurement of the monitored flow parameter which is above or below a second predefined threshold, based on the received measurement signalling; and
terminate the flow of primary or secondary fluid based on said determination.

The controller may be configured to generate a notification indicative of the detected sudden change or measurement above/below the second predefined threshold.
The aspirate-dispense apparatus comprises a flow meter configured to measure the monitored flow parameter of the secondary fluid, a pressure regulator configured to regulate the pressure of the secondary fluid, and a valve configured to limit the flow of primary or secondary fluid, and the controller is configured to:

receive the measurement signalling for the monitored flow parameter of the secondary fluid from the flow meter to enable determination of the volume of aspirated or dispensed primary fluid; and
control the pressure regulator and valve based on the determined volume of aspirated or dispensed primary fluid to control the flow of primary or secondary fluid.

The controller is configured to generate the calibration data defining the relationship between the volume of aspirated or dispensed primary fluid and the monitored flow parameter of the secondary fluid.
The controller is configured to generate the calibration data by:

controlling the pressure regulator and valve to aspirate or dispense one or more known volumes of primary fluid;
receiving, from the flow meter, respective measurements of the monitored flow parameter of the secondary fluid corresponding to the one or more known volumes of primary fluid; and
associating the one or more known volumes of primary fluid with the respective measurements of the monitored flow parameter of the secondary fluid.

The controller may be configured to associate the plurality of known volumes of primary fluid with the plurality of respective measurements of the monitored flow parameter of the secondary fluid by generating one or more of a look-up table, a graph and an equation defining the relationship therebetween.
The controller may be further configured to control the flow of primary or secondary fluid to dispense the specific volume of primary fluid by:

controlling the pressure regulator and valve to aspirate a known volume of primary fluid;
controlling the pressure regulator and valve to incrementally dispense the aspirated primary fluid over a recorded number of dispense cycles; and
determining a cycle volume based on the known volume of primary fluid and recorded number of dispense cycles.

Each dispense cycle may have a known duration, and the controller may be further configured to:

determine a dispense duration required to dispense the specific volume of primary fluid based on the cycle duration and cycle volume; and
control the pressure regulator and valve to dispense the primary fluid for the determined dispense duration.

The controller may be further configured to:

calculate a cycle volume for a plurality of different cycle durations; and
associate the cycle volume with each cycle duration to generate further calibration data.

The controller may be configured to associate the cycle volume with each cycle duration by generating one or more of a look-up table, a graph and an equation defining the relationship therebetween.
The controller may be further configured to:

determine, using the further calibration data, the cycle duration required to dispense the specific volume of primary fluid; and
control the pressure regulator and valve to dispense the primary fluid for the determined cycle duration.

According to a further aspect, there is provided an aspirate-dispense apparatus comprising any controller described herein, the aspirate-dispense apparatus comprising, in use, a secondary fluid in working communication with a primary fluid, optionally wherein the primary fluid is a liquid and the secondary fluid is a gas, the aspirate-dispense apparatus further comprising a flow meter configured to measure the monitored flow parameter of a secondary fluid, a pressure regulator configured to regulate the pressure of the secondary fluid and a valve configured to limit the flow of primary or secondary fluid.

The aspirate-dispense apparatus may further comprise flow meter circuitry configured to convert an output signal from the flow meter to the received measurement signalling, and valve circuitry configured to interface the valve with the controller.

The aspirate-dispense apparatus may comprise a plurality of primary fluid channels through which the primary fluid can flow into or out of the aspirate-dispense apparatus, and a plurality of corresponding secondary fluid channels connected to the respective primary fluid channels to provide the working communication between the primary and secondary fluids.

Each primary or secondary fluid channel may comprise a filter configured to prevent the primary fluid from contacting the flow meter.

The plurality of primary fluid channels may be connected to a common primary manifold configured to receive and contain the primary fluid aspirated via the plurality of primary fluid channels.

Each primary fluid channel may comprise a tip configured to receive and contain the primary fluid aspirated via the respective primary fluid channel.

The tip may be a pipette tip for one or more of aspiration (e.g. aspiration tip) and dispensing (e.g. dispensing tip). The tip may be configured for single use (i.e. disposable tip) or multiple use (i.e. reusable tip). Disposable tips may be used to reduce contamination between different samples of primary fluid.

The primary manifold or tip may have a capacity which is sufficient to contain a volume of primary fluid required for multiple dispense cycles.

The plurality of secondary fluid channels may be connected to a common secondary manifold configured to interface the plurality of secondary fluid channels with the pressure regulator.

The primary fluid may be a liquid and the secondary fluid may be a gas.

According to a further aspect, there is provided a method of controlling one or more of aspiration and dispensing of a primary fluid by an aspirate-dispense apparatus according to claim 10.

The steps of any method disclosed herein do not have to be performed in the exact order disclosed, unless explicitly stated or understood by the skilled person.

Corresponding computer programs (which may or may not be recorded on a carrier) for implementing one or more of the methods disclosed herein are also within the present disclosure and encompassed by one or more of the described example embodiments. The present disclosure includes one or more corresponding aspects, example embodiments or features in isolation or in various combinations whether or not specifically stated (including claimed) in that combination or in isolation. Corresponding means for performing one or more of the discussed functions are also within the present disclosure.

The above summary is intended to be merely exemplary and non-limiting.

**Brief Description of the Figures**

A description is now given, by way of example only, with reference to the accompanying schematic drawings, in which:-

Figure 1 shows schematically an aspirate-dispense apparatus comprising a head assembly and a control assembly;
Figure 2 shows graphically calibration data for a dispensing operation of the aspirate-dispense apparatus;
Figure 3a shows in front view the head assembly;
Figure 3b shows in cross-section the head assembly;
Figure 4 shows schematically a flow meter subassembly of the control assembly;
Figure 5a shows in front view a non-contact valve-tip subassembly;
Figure 5b shows in front view a contact valve-tip subassembly;
Figure 5c shows in exploded view the contact valve-tip subassembly;
Figure 5d shows in cross-section the contact valve-tip subassembly;
Figure 6 shows in the form of a flow chart a method of controlling the aspirate-dispense apparatus; and
Figure 7 shows schematically a computer-readable medium comprising a computer program configured to control, perform or enable the method of Figure 6.

**Description of Specific Aspects/Embodiments**

As mentioned previously, the present disclosure relates to an apparatus and associated methods for controlling the aspiration and/or dispensing of fluids. In particular, but not exclusively, the apparatus and associated methods may be configured to control the aspiration and/or dispensing of fluid in the millilitre volume range or below (e.g. microfluidics). This may be applied to industries such as life sciences, healthcare, agri-food technology and the environment.

Later described embodiments depicted in the figures have been provided with reference numerals that correspond to similar features of earlier described embodiments. For example, feature number 1 can also correspond to numbers 101, 201, 301 etc. These numbered features may appear in the figures but may not have been directly referred to within the description of these particular embodiments. These have still been provided in the figures to aid understanding of the further embodiments, particularly in relation to the features of similar earlier described embodiments.

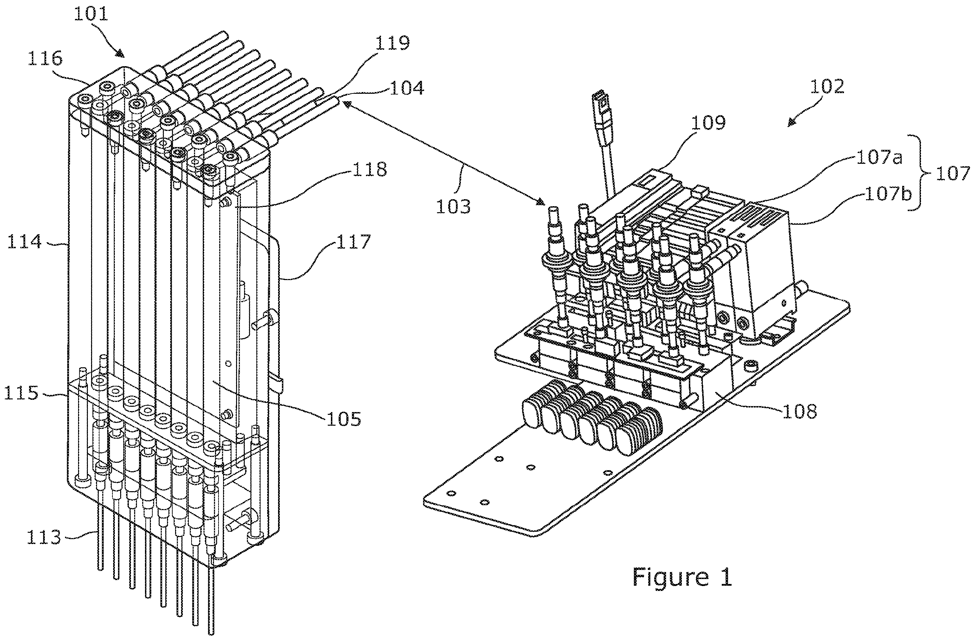

Figure 1 shows schematically an aspirate-dispense apparatus comprising a head assembly 101 and a control assembly 102 which, in use, are in fluid communication 103 with one another via one or more fluid connectors 104. The head assembly 101 is configured to aspirate and/or dispense a primary fluid under the control of the control assembly 102. To enable this control, the aspirate-dispense apparatus comprises a secondary fluid in working communication with the primary fluid. The expression "working communication" in this context may be taken to mean that the secondary fluid is in direct or indirect (e.g. via an intermediary component such as a piston) contact with the primary fluid such that a flow of the secondary fluid causes a corresponding flow of the primary fluid and vice-versa.

In some examples, the aspirate-dispense apparatus may comprise a single primary fluid channel 105 through which the primary fluid can flow into or out of the aspirate-dispense apparatus, and a single secondary fluid channel 406 connectable to the primary fluid channel 105 to provide the working communication between the primary and secondary fluids. In other examples, however, the aspirate-dispense apparatus may comprise a plurality of primary fluid channels 105 and a plurality of corresponding secondary fluid channels 406. The latter scenario may be useful when the aspirate-dispense apparatus is being used to aspirate from, or dispense to, a plurality of fluid containers such as a multi-well plate or tape for processing multiple samples in parallel.

The control assembly 102 itself comprises a pressure regulator 107, a flow meter subassembly 108 and a controller 109. The pressure regulator 107 is configured to regulate the pressure of the secondary fluid to cause a flow thereof. In this example, the pressure regulator 107 is divided into two different parts: an aspirate pressure regulator 107a which provides a negative pressure (or vacuum) to the flow meter subassembly 108 for use in aspirating the primary fluid; and a dispense pressure regulator 107b which provides a positive pressure to the flow meter subassembly 108 for use in dispensing the primary fluid. In other examples, the aspirate 107a and dispense 107b pressure regulators could be replaced by a single pressure regulator configured to provide both the positive and negative pressures. As described in more detail below, the flow meter subassembly 108 comprises a flow meter 410 configured to monitor a flow parameter of the secondary fluid.

The controller 109 is configured to control one or more of aspiration and dispensing of the primary fluid by the head assembly 101. To achieve this, the controller 109 receives measurement signalling for the monitored flow parameter of the secondary fluid from the flow meter 410. The controller 109 then determines, using calibration data defining a relationship between the volume of aspirated or dispensed primary fluid and the monitored flow parameter of the secondary fluid, a volume of aspirated or dispensed primary fluid using the received measurement signalling (i.e. the controller 109 monitors the aspirated/dispensed volume substantially in real-time). Based on this determined/monitored volume, the controller 109 controls the flow of primary or secondary fluid in order to aspirate or dispense a specific volume of primary fluid. The flow of primary or secondary fluid is controlled by controlling the pressure regulator 107 and/or a valve 511 configured to limit the flow of primary or secondary fluid. The valve 511 can be located either within the head assembly 101 (i.e. for limiting the flow of primary fluid) or the control assembly 102 (i.e. for limiting the flow of secondary fluid).

The controller 109 may comprise a processor and a memory storing computer program code, the memory and computer program code configured to, with the processor, cause the controller 109 to perform the described functionality. The processor may be configured for general operation of the aspirate-dispense apparatus by providing signalling to, and receiving signalling from, the other components to manage their operation. The memory may be configured to store computer code configured to perform, control or enable operation of the aspirate-dispense apparatus. The memory may also be configured to store settings for the other components. The processor may access the memory to retrieve the component settings in order to manage the operation of the other components. The processor may be a microprocessor, including an Application Specific Integrated Circuit (ASIC). The memory may be a temporary storage medium such as a volatile random access memory. On the other hand, the storage medium may be a permanent storage medium such as a hard disk drive, a flash memory, or a non-volatile random access memory. Additionally or alternatively, the controller 109 may comprise suitable logic circuitry configured to perform the described functionality.

The monitored flow parameter of the secondary fluid includes a displaced volume of secondary fluid. The controller 109 is configured to determine when the specific volume of primary fluid has been aspirated or dispensed based on the displaced volume of secondary fluid reaching a first predefined threshold, and terminate the flow of primary or secondary fluid based on said determination. The monitored flow parameter is not limited to the displaced volume of secondary fluid, however. Other suitable examples include pressure and flow rate of the secondary fluid (or a combination of two or more of these parameters).

Unlike existing systems, therefore, the volume of aspirated or dispensed primary fluid is determined and controlled based on the monitored flow parameter of the secondary fluid rather than relying exclusively on time. In this way, the aspirated or dispensed volume is less dependent upon the variable characteristics of the apparatus or primary fluid resulting in greater accuracy and less waste. The present approach also facilitates automation of the aspiration or dispense operation thereby reducing human error and calibration time. As well as determining and controlling the volume of aspirated or dispensed primary fluid, the monitoring of a flow parameter of the secondary fluid also has other uses. For instance, there may be a sudden change in the monitored flow parameter once all the primary fluid (excluding dead volume for aspiration) has been aspirated or dispensed. This is because there is typically a difference in the flow characteristics, and therefore displacement, of different fluids. This is particularly dramatic when there is a change in state from liquid to gas (or vice-versa) and can be used to indicate run-out of the primary fluid from the source container or the head assembly 101. In this scenario, the controller 109 may be configured to terminate the flow of primary or secondary fluid based on determination of the sudden change in the monitored flow parameter of the secondary fluid to discontinue the aspiration or dispensing operation. The controller 109 may also be configured to generate a notification indicative of the detected sudden change for the benefit of a user of the aspirate-dispense apparatus.

There may also be a detectable change in the monitored flow parameter with wear and tear, or failure, of a component of the aspirate-dispense apparatus. This can occur, for example, due to a change in pressure caused by a leak in the system. Here, the controller 109 may be configured to terminate the flow of primary or secondary fluid if a measurement of the flow parameter is above or below a second predefined threshold to enable inspection and repair/replacement of the relevant component. Similar to a detected sudden change in the monitored flow parameter, the controller 109 may also be configured to generate a notification indicative of the monitored flow parameter being above or below the second predefined threshold to alert a user about the possible need for maintenance of the aspirate-dispense apparatus.

Whilst the primary fluid would typically be a liquid and the secondary fluid would typically be a gas, the aspirate-dispense apparatus is not limited in this way. For instance, both the primary and secondary fluids could be liquids provided that the secondary fluid does not intermix with, or cause a chemical or biological change in, the primary fluid. In this respect, the primary fluid could be water and the secondary fluid could be a hydrophobic liquid such as an oil (or vice-versa). Furthermore, when the primary fluid is a liquid and the secondary fluid is a gas, the gas should be sufficiently inert and insoluble in the primary fluid that it does not cause a chemical or biological change in the primary fluid, or a change in pressure that could potentially affect the calibration. Ideally, the primary and secondary fluids would also exhibit sufficiently distinct flow parameters that run-out of the primary fluid during a dispensing operation can be detected based on a sudden change in the flow parameter. Examples of primary fluids include biological or nucleic acid samples (such as human, plant or animal biological materials or genetic samples), chemistries and reagents (such as nucleic acid sample preparation reagents, molecular biology reagents and polymerase chain reaction reagents). For instance, the aspirate-dispense apparatus may be used for aspirating and/or dispensing saliva samples being tested for diseases such as COVID-19. Field-collected saliva samples can vary in viscosity and consistency, but the present apparatus is well-suited to such primary fluids because it does not rely on time to monitor and control the aspirated or dispensed volume. The aspirate-dispense apparatus may also be used with primary fluids such as oligo synthesis reagents and genome sequencing samples and reagents for the production of oligonucleotides. Examples of secondary fluids include air, helium, nitrogen and argon.

As mentioned above, the controller 109 uses calibration data in order to determine/monitor the volume of aspirated or dispensed primary fluid. The calibration data defines the relationship between the volume of aspirated or dispensed primary fluid and the flow parameter of the secondary fluid. This may be generated by the controller 109 for each type of primary fluid. To generate the calibration data, the controller 109 is configured to control the pressure regulator 107 and/or valve 511 to aspirate or dispense one or more known volumes of primary fluid, and receive (from the flow meter 410) respective measurements of the flow parameter of the secondary fluid corresponding to the one or more known volumes of primary fluid. The controller 109 then associates the one or more known volumes of primary fluid with the respective measurements of the flow parameter of the secondary fluid for use in subsequent aspiration or dispense operations, e.g. by generating one or more of a look-up table, a graph and an equation defining the relationship therebetween.

In practice, however, the aspiration and dispensing operations may be calibrated separately. This is because aspiration of the primary fluid using the aspirate-dispense apparatus is independent of fluid viscosity whereas dispensing of the primary fluid may not be. Regarding aspiration, the controller 109 may begin the calibration process by controlling the pressure regulator 107 and valve 511 to aspirate primary fluid from a source container containing an unknown volume of primary fluid until a sudden change in the monitored flow parameter of the secondary fluid is detected. This sudden change in the monitored flow parameter indicates that the head assembly 101 has aspirated as much of the primary fluid as it possibly can and is now aspirating air (or another environmental gas). Any primary fluid remaining in the source container is referred to as an "aspiration dead volume". This is the volume of primary fluid that the head assembly 101 cannot aspirate from the source container due to physical restrictions such as the size and shape of the source container relative to that of the tip(s) 512 of the head assembly 101 (the latter of which are described in more detail below). The aspirated primary fluid is then dispensed as waste.

A known calibration volume $V_1$ of primary fluid is then added to the source container (which still contains the aspiration dead volume of primary fluid) before the controller 109 aspirates the primary fluid until a sudden change in the monitored flow parameter is detected as before. If the monitored flow parameter is the displaced volume of secondary fluid $V_2$, an aspiration calibration gain value G can be determined using a measurement of the displaced volume $V_2$ of the secondary fluid together with a knowledge of any pre-existing gain value $G_0$ as per the following equation:

$$G = G_0 \times \left(\frac{V_2}{V_1}\right)$$

The displaced volume of secondary fluid $V_2$ measured during any subsequent aspiration operations can then be multiplied by the aspiration calibration gain value to provide a more accurate measurement of the aspirated volume of primary fluid.

Fluid viscosity affects the rate of flow of the primary fluid out of the tip(s) 512 of the head assembly and thus the length of time that the valve 511 needs to be open for in order to dispense a particular volume of primary fluid. As such, the controller 109 may be configured to generate further calibration data for dispensing operations. In this respect, the controller 109 may first control the pressure regulator 107 and valve 511 to aspirate a known volume of primary fluid. This can be achieved by using the calibration data generated for aspiration operations to terminate the aspiration operation once the known volume has been aspirated, or by aspirating all of the primary fluid in the source container minus the aspiration dead volume as before.

Once the known volume has been aspirated, the controller 109 then incrementally dispenses the aspirated primary fluid over a recorded number of dispense cycles until a sudden change in the monitored flow parameter of the secondary fluid is detected. This sudden change in the monitored flow parameter indicates that the head assembly 101 has dispensed as much of the primary fluid as it possibly can and is now dispensing air (or another secondary fluid). Any primary fluid remaining in the head assembly 101 is referred to as a "dispensing dead volume". This is the volume of primary fluid that the head assembly 101 is unable to dispense from the system. In practice, the controller 109 may incrementally dispense the aspirated primary fluid by periodically opening the valve 511 for a known duration (or "valve opening time"). The controller 109 then determines a cycle volume (i.e. the dispensed volume of primary fluid per dispense cycle) by dividing the known volume of primary fluid by the recorded number of dispense cycles. This data can then be used during future dispense operations to dispense a specific volume of primary fluid using a plurality of dispense cycles. In this scenario, the controller 109 determines a dispense duration required to dispense the specific volume of primary fluid by dividing the specific volume by the cycle volume, and multiplying this by the cycle duration. It then controls the pressure regulator 107 and/or valve 511 to dispense the primary fluid for the determined dispense duration. The controller 109 may be further configured to calculate a cycle volume for a plurality of different cycle durations and associate the cycle volume with cycle duration in the form of a look-up table, graph and/or equation defining the relationship therebetween.

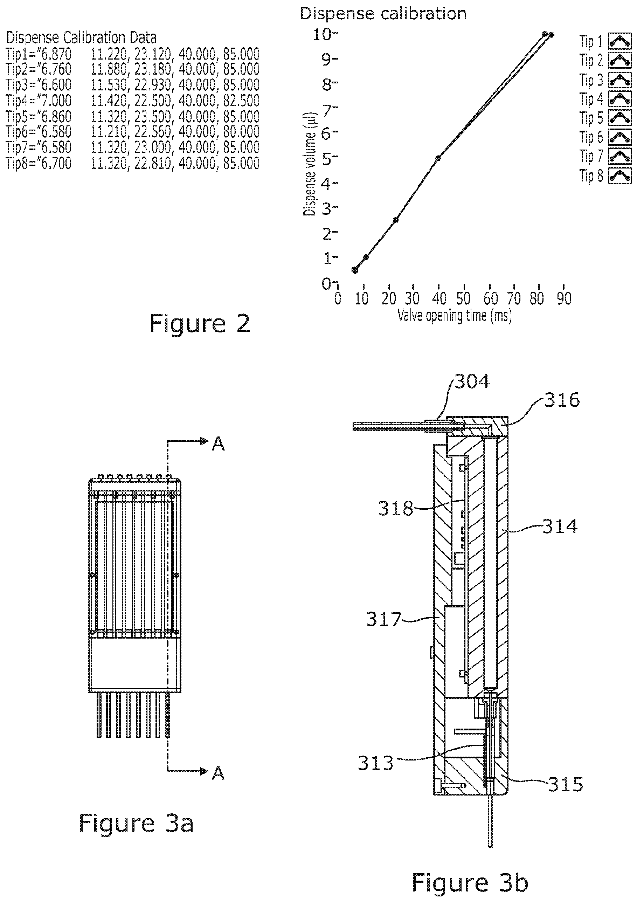

Figure 2 shows an example of the further calibration data for an experimental dispensing operation of the aspirate-dispense apparatus. During this experiment, water and air were used as the primary and secondary fluids, respectively, and the head assembly 101 had 8 primary fluid channels 105 each comprising a tip 512 through which the primary fluid was aspirated and dispensed. For each tip 512, the cycle volume was determined for 5 different cycle durations and then plotted as a graph. As can be seen from the data, there were slight variations in the cycle duration ("valve opening time") between tips 512, but an approximately linear relationship for each tip 512. This data can then by used during future dispense operations to dispense a specific volume of primary fluid using a single dispense cycle. In this scenario, the controller 109 determines the cycle duration required to dispense the specific volume of primary fluid by reading, interpolating or extrapolating the further calibration data. It then controls the pressure regulator 107 and/or valve 511 to dispense the primary fluid for the determined cycle duration.

As shown in Figure 1, the head assembly 101 comprises a number of additional components that will now be described. In this example, the head assembly 101 comprises a plurality of primary fluid channels 105 (8 rather than a single primary fluid channel 105), each having a valve-tip subassembly 113 through which the primary fluid can flow into or out of the aspirate-dispense apparatus. The valve-tip subassembly 113 itself comprises a tip 512 and a valve 511 configured to limit the flow of primary fluid therethrough. The plurality of primary fluid channels 105 are connected to a common primary manifold 114 configured to receive and contain the primary fluid aspirated via the respective valve-tip subassemblies 113. In this respect, the primary manifold 114 may have a capacity which is sufficient to contain a volume of primary fluid required for multiple dispense cycles from each primary fluid channel 105.

The head assembly 101 further comprises a valve cover 115 configured to protect the valve-tip subassemblies 113 from damage, a detachable manifold cover 116 configured to facilitate cleaning of the common primary manifold 114 underneath, and a manifold mount 117 configured for mechanically fastening the head assembly 101 to another object. The latter feature may help to ensure that the primary fluid channels 105 are in a fixed orientation (e.g. substantially vertical in use) between consecutive aspiration or dispense operations for greater consistency. The head assembly 101 also comprises valve circuitry configured to interface the valve 511 of each valve-tip subassembly 113 with the controller 109 of the control assembly 102. In this example, the valve circuitry comprises a circuit board 118 and a wired connection 119 between the circuit board 118 and the controller 109, but a wireless connection could be used instead. The circuit board 118 may comprise indicator lights (or light-emitting diodes) that indicate the open or closed state of each valve 511.

Figures 3a and 3b show front and cross-sectional views of the head assembly 101. The cross-section in Figure 3b has been taken through line A-A as indicated in Figure 3a. The various components are as described above in relation to Figure 1 and are therefore denoted by corresponding reference numerals.

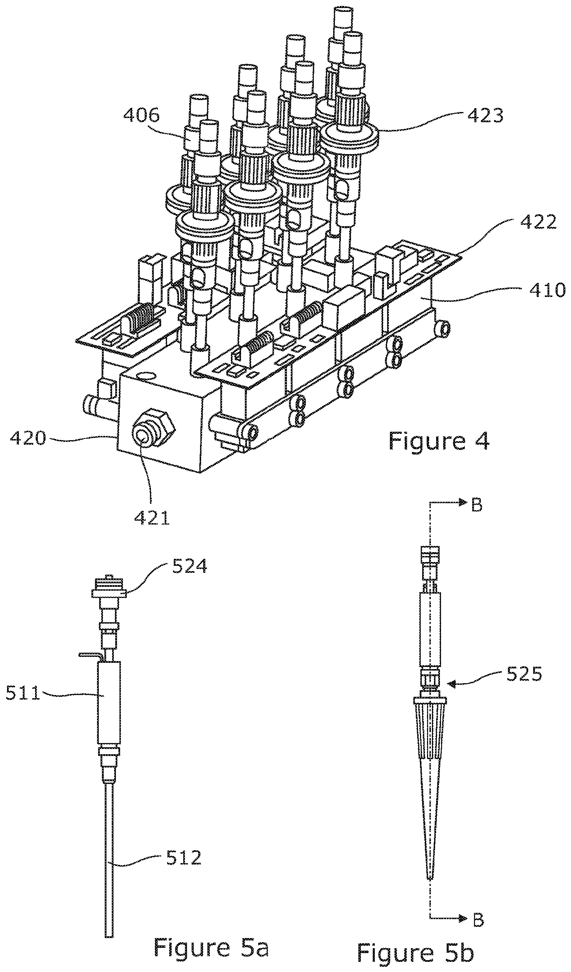

Figure 4 shows schematically the flow meter subassembly 108 of the control assembly 102. In this example, the flow meter subassembly 108 comprises a plurality of secondary fluid channels 406 (8 rather than a single secondary fluid channel 406) which are connectable to corresponding primary fluid channels 105 of the head assembly 101 via a plurality of respective fluid connectors 104. The plurality of secondary fluid channels 406 are also connected to a common secondary manifold 420 of the flow meter subassembly 108 which is configured to interface the plurality of secondary fluid channels 406 with the pressure regulator 107 through a pressure inlet 421.

The flow meter subassembly 108 further comprises a respective flow meter 410 configured to independently monitor the flow parameter of the secondary fluid within each of the different secondary fluid channels 406, and flow meter circuitry 422 configured to convert the output signal from each flow meter 410 to measurement signalling suitable for use by the controller 109. In addition, each of the secondary fluid channels 406 comprise a filter 423 configured to prevent the primary fluid from contacting, and potentially damaging, the flow meter 410 (although they could be positioned within the primary fluid channels 105 or the fluid connectors 104 between the primary 105 and secondary 406 fluid channels instead). Whilst the flow of primary fluid into the secondary fluid channels 406 is unlikely to happen with the monitored flow parameter of the secondary fluid being used to control aspiration and dispensing of the primary fluid, the filters 423 serve as a safety feature if it does. The specific filters required will depend upon the type of primary fluid. For example, hydrophobic filters may be used when the primary fluid is water and oleophobic filters may be used when the primary fluid is an oil.

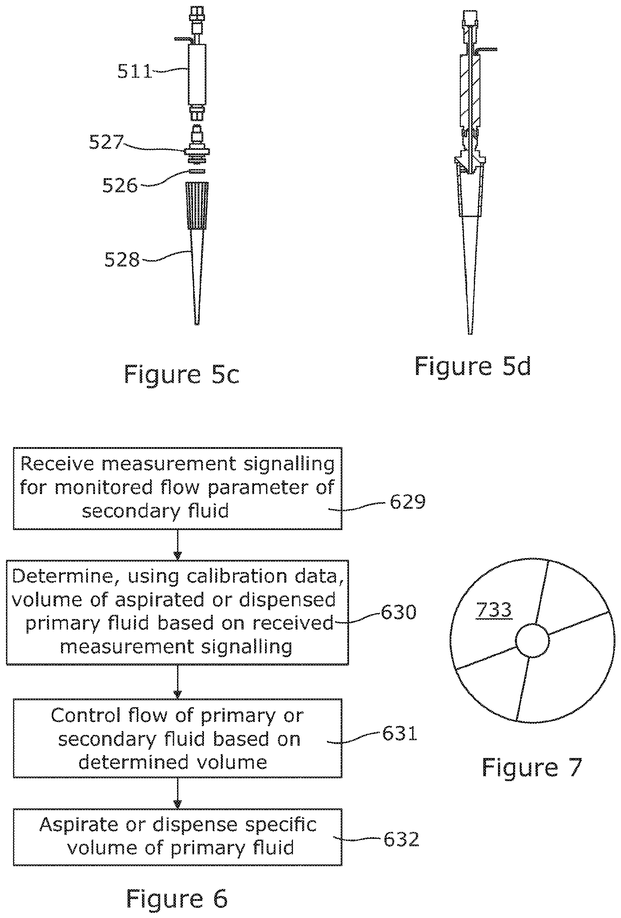

Figure 5a shows a non-contact valve-tip subassembly 113 of the head assembly 101. As mentioned above, the primary fluid enters and leaves the head assembly 101 via the valve-tip subassembly 113. In this example, the valve-tip subassembly 113 comprises a tip 512, a valve 511 and a mandrel 524. The tip 512 provides a metered orifice which regulates the velocity of primary fluid with pressure according to Bernoulli's principle, but does not contact the fluid container into which the primary fluid is dispensed during the dispense operation (hence "non-contact"). The valve 511 limits the flow of primary fluid therethrough as instructed by the controller 109 (typically between open and closed states), whilst the mandrel 524 allows access to the tip 512 and valve 511 to facilitate maintenance or replacement thereof.

Figures 5b-d show front, exploded and cross-sectional views of a contact valve-tip subassembly 525, respectively. The cross-section in Figure 5d has been taken through line B-B as indicated in Figure 5b. The contact valve-tip subassembly 525 comprises a tip 528, an O-ring 526, a valve 511, a mandrel 524 and a valve-to-tip fitting 527. The mandrel 524 is similar to that of Figure 5a, the valve-to-tip fitting 527 is used to connect the valve 511 to the tip 528, and the O-ring 526 seals the valve-to-tip fitting 527 to provide a fluid-tight connection. Unlike the valve-tip subassembly 113 of Figure 5a, this tip 528 is configured to break the surface of the primary fluid in the fluid container during the dispense operation (hence "contact"). Furthermore, the tip 528 is configured to receive and contain the aspirated primary fluid and, in some cases, may have a capacity which is sufficient to contain a volume of primary fluid required for multiple dispense cycles. As such, the tip 528 of Figures 5b-d removes the need for a common primary manifold 114 and manifold cover 116 in the head assembly 101. To account for this change, each fluid connector 304 may be connected directly to the valve 511 of a contact valve-tip subassembly rather than the manifold cover 316 as per the head assembly 301 of Figure 3b.

A more detailed description of the aspiration and dispensing modes of the aspirate-dispense apparatus of Figure 1 will now be provided. In the aspiration mode, the controller 109 sends an "initiate" signal to the aspirate pressure regulator 107a and valve circuitry to open the valve 511 of the valve-tip subassembly 113 and apply a negative pressure to the pressure inlet 421 of the common secondary manifold 420. This causes a flow of secondary fluid from the primary fluid channels 105 through the fluid connectors 104 to the secondary fluid channels 406. The flow of secondary fluid causes primary fluid to be drawn through the tips 512 and into the common primary manifold 114. During this process, the flow of secondary fluid through the secondary fluid channels 406 is monitored by the respective flow meters 410, the output signals of which are converted by the flow meter circuitry 422 into suitable measurement signalling for the controller 109. The controller 109 monitors the volume of aspirated primary fluid based on the measurement signalling and calibration data, and terminates the flow of secondary fluid once the desired volume of primary fluid has been aspirated. Termination of the flow of secondary fluid is performed by sending a "terminate" signal to the aspirate pressure generator 107a and valve circuitry to close the valve 511 of the valve-tip subassembly 113 and remove the negative pressure applied to the pressure inlet 421 of the common secondary manifold 420.

In the dispensing mode, the controller 109 sends an "initiate" signal to the dispense pressure regulator 107b and valve circuitry to open the valve 511 of the valve-tip subassembly 113 and apply a positive pressure to the pressure inlet 421 of the common secondary manifold 420. This causes a flow of secondary fluid from the secondary fluid channels 406 through the fluid connectors 104 to the primary fluid channels 105. The flow of secondary fluid causes primary fluid to be dispensed out of the common primary manifold 114 and through the tips 512. The primary fluid can be dispensed in a single (longer) dispense cycle or incrementally over the course of a plurality of (shorter) dispense cycles. During this process, the flow of secondary fluid through the secondary fluid channels 406 is monitored by the respective flow meters 410, the output signals of which are converted by the flow meter circuitry 422 into suitable measurement signalling for the controller 109. The controller 109 monitors the volume of dispensed primary fluid based on the measurement signalling and calibration data, and terminates the flow of secondary fluid once the desired volume of primary fluid has been dispensed. Termination of the flow of secondary fluid is performed by sending a "terminate" signal to the dispense pressure generator 107b and valve circuitry to close the valve 511 of the valve-tip subassembly 113 and remove the positive pressure applied to the pressure inlet 421 of the common secondary manifold 420.

Figure 6 shows the main steps 629-632 of a method of controlling one or more of aspiration and dispensing of a primary fluid by an aspirate-dispense apparatus described herein. As illustrated, the method generally comprises: receiving 629 measurement signalling for a monitored flow parameter of the secondary fluid; determining 630, using calibration data, a volume of aspirated or dispensed primary fluid based on the received measurement signalling, the calibration data defining a relationship between the volume of aspirated or dispensed primary fluid and the monitored flow parameter of the secondary fluid; controlling 631 the flow of primary or secondary fluid based on the determined volume; and aspirating or dispensing 632 a specific volume of primary fluid.

Figure 7 illustrates schematically a computer/processor readable medium 733 providing a computer program. The computer program may comprise computer code configured to perform, control or enable one or more of the method steps 629-632 of Figure 6. In this example, the computer/processor readable medium 733 is a disc such as a digital versatile disc (DVD) or a compact disc (CD). In other embodiments, the computer/processor readable medium 733 may be any medium 733 that has been programmed in such a way as to carry out an inventive function. The computer/processor readable medium may be a removable memory device such as a memory stick or memory card (SD, mini SD, micro SD or nano SD).

The applicant hereby discloses in isolation each individual feature described herein and any combination of two or more such features, to the extent that such features or combinations are capable of being carried out based on the present specification as a whole, in the light of the common general knowledge of a person skilled in the art, irrespective of whether such features or combinations of features solve any problems disclosed herein, and without limitation to the scope of the claims. The applicant indicates that the disclosed aspects/embodiments may consist of any such individual feature or combination of features. In view of the foregoing description it will be evident to a person skilled in the art that various modifications may be made within the scope of the disclosure.

## Claims

1. A controller (109) configured to control one or more of aspiration and dispensing of a primary fluid by an aspirate-dispense apparatus, the aspirate-dispense apparatus comprising a secondary fluid in working communication with the primary fluid, a flow meter (410) configured to measure a monitored flow parameter of the secondary fluid, a pressure regulator (107) configured to regulate a pressure of the secondary fluid, and a valve (511) configured to limit a flow of primary or secondary fluid, wherein the controller (109) is configured to:

    generate calibration data defining a relationship between a volume of aspirated or dispensed primary fluid and the monitored flow parameter of the secondary fluid by:

        controlling the pressure regulator (107) and valve (511) to aspirate or dispense one or more known volumes of primary fluid;
        receiving, from the flow meter (410), respective measurements of the monitored flow parameter of the secondary fluid corresponding to the one or more known volumes of primary fluid; and
        associating the one or more known volumes of primary fluid with the respective measurements of the monitored flow parameter of the secondary fluid;

    receive, from the flow meter (410), measurement signalling for the monitored flow parameter of the secondary fluid;
    determine, using the generated calibration data, a volume of aspirated or dispensed primary fluid based on the received measurement signalling; and
    control, using the pressure regulator (107) and valve (511), the flow of primary or secondary fluid based on the determined volume to aspirate or dispense a specific volume of primary fluid,
    wherein the monitored flow parameter of the secondary fluid comprises a displaced volume of secondary fluid, and wherein the controller (109) is configured to:

determine when the specific volume of primary fluid has been aspirated or dispensed based on the displaced volume of secondary fluid reaching a first predefined threshold; and

terminate the flow of primary or secondary fluid based on said determination.

2. The controller of claim 1, wherein the controller (109) is configured to:

determine a sudden change in the monitored flow parameter of the secondary fluid, or a measurement of the monitored flow parameter which is above or below a second predefined threshold, based on the received measurement signalling; and

terminate the flow of primary or secondary fluid based on said determination, optionally wherein the controller (109) is configured to generate a notification indicative of the detected sudden change or measurement above/below the second predefined threshold.

3. The controller (109) of claim 1, wherein the controller (109) is configured to control the flow of primary or secondary fluid based on the determined volume to aspirate a specific volume of primary fluid, and wherein the controller (109) is further configured to control the flow of primary or secondary fluid to dispense the specific volume of primary fluid by:

controlling the pressure regulator (107) and valve (511) to aspirate a known volume of primary fluid;

controlling the pressure regulator (107) and valve (511) to incrementally dispense the aspirated primary fluid over a recorded number of dispense cycles; and

determining a cycle volume based on the known volume of primary fluid and recorded number of dispense cycles, wherein each dispense cycle has a known duration, and wherein the controller (109) is further configured to:

determine a dispense duration required to dispense the specific volume of primary fluid based on the cycle duration and cycle volume; and

control the pressure regulator (107) and valve (511) to dispense the specific volume of primary fluid for the determined dispense duration.

4. The controller (109) of claim 1, wherein the controller (109) is configured to control the flow of primary or secondary fluid based on the determined volume to aspirate a specific volume of primary fluid, and wherein the controller (109) is further configured to:

control the flow of primary or secondary fluid to dispense the specific volume of primary fluid by:

controlling the pressure regulator (107) and valve (511) to aspirate a known volume of primary fluid;

controlling the pressure regulator (107) and valve (511) to incrementally dispense the aspirated primary fluid over a recorded number of dispense cycles; and

determining a cycle volume based on the known volume of primary fluid and recorded number of dispense cycles;

repeat these steps for a plurality of different cycle durations;

associate the cycle volume with each cycle duration to generate further calibration data;

determine, using the further calibration data, the cycle duration required to dispense the specific volume of primary fluid; and

control the pressure regulator (107) and valve (511) to dispense the specific volume of primary fluid for the determined cycle duration.

5. An aspirate-dispense apparatus comprising the controller (109) of any preceding claim, the aspirate-dispense apparatus comprising, in use, a secondary fluid in working communication with a primary fluid, optionally wherein the primary fluid is a liquid and the secondary fluid is a gas, wherein the aspirate-dispense apparatus further comprises a flow meter (410) configured to measure the monitored flow parameter of a secondary fluid, a pressure regulator (107) configured to regulate the pressure of the secondary fluid, and a valve (511) configured to limit the flow of primary or secondary fluid.

6. The aspirate-dispense apparatus of claim 5, wherein the aspirate-dispense apparatus further comprises flow meter circuitry (422) configured to convert an output signal from the flow meter (410) to the received measurement signalling, and valve circuitry configured to interface the valve (511) with the controller (109).

7. The aspirate-dispense apparatus of claim 5 or 6, wherein the aspirate-dispense apparatus comprises a plurality of primary fluid channels (105) through which the primary fluid can flow into or out of the aspirate-dispense apparatus, and a plurality of corresponding secondary fluid channels (406) connected to the respective primary fluid channels (105) to provide the working communication between the primary and secondary fluids, wherein, when dependent upon claim 6, each primary or secondary fluid channel (105, 406) optionally comprises a filter (423) configured to prevent the primary fluid from contacting the flow meter (410).

8. The aspirate-dispense apparatus of claim 7, wherein the plurality of primary fluid channels (105) are connected to a common primary manifold (114) configured to receive and contain the primary fluid aspirated via the plurality of primary fluid channels (105), or wherein each primary fluid channel (105) comprises a tip (512) configured to receive and contain the primary fluid aspirated via the respective primary fluid channel (105).

9. The aspirate-dispense apparatus of claim 7 or 8 when dependent upon claim 6, wherein the plurality of secondary fluid channels (406) are connected to a common secondary manifold (420) configured to interface the plurality of secondary fluid channels (406) with the pressure regulator (107).

10. A method of controlling one or more of aspiration and dispensing of a primary fluid by an aspirate-dispense apparatus, the aspirate-dispense apparatus comprising a secondary fluid in working communication with the primary fluid, a flow meter (410) configured to measure a monitored flow parameter of the secondary fluid, a pressure regulator (107) configured to regulate a pressure of the secondary fluid, and a valve (511) configured to limit a flow of primary or secondary fluid, wherein the method comprises:

generating calibration data defining a relationship between a volume of aspirated or dispensed primary fluid and the monitored flow parameter of the secondary fluid by:

controlling the pressure regulator (107) and valve (511) to aspirate or dispense one or more known volumes of primary fluid;
receiving, from the flow meter (410), respective measurements of the monitored flow parameter of the secondary fluid corresponding to the one or more known volumes of primary fluid; and
associating the one or more known volumes of primary fluid with the respective measurements of the monitored flow parameter of the secondary fluid;

receiving (629), from the flow meter (410), measurement signalling for the monitored flow parameter of the secondary fluid;
determining (630), using the generated calibration data, a volume of aspirated or dispensed primary fluid based on the received measurement signalling; and
controlling (631), using the pressure regulator (107) and valve (511), the flow of primary or secondary fluid based on the determined volume to aspirate or dispense (632) a specific volume of primary fluid,
wherein the monitored flow parameter of the secondary fluid comprises a displaced volume of secondary fluid, and wherein the method further comprises:

determining when the specific volume of primary fluid has been aspirated or dispensed based on the displaced volume of secondary fluid reaching a first predefined threshold; and
terminating the flow of primary or secondary fluid based on said determination.

11. A computer program comprising computer code configured to perform the method of claim 10.

## Patentansprüche

1. Steuerung (109), die konfiguriert ist, um das Ansaugen und/oder Abgeben eines primären Fluids durch ein Ansaug-/Abgabegerät zu steuern, wobei das Ansaug-/Abgabegerät ein sekundäres Fluid in Arbeitskommunikation mit dem primären Fluid, einen Durchflussmesser (410), der konfiguriert ist, um einen überwachten Durchflussparameter des sekundären Fluids zu messen, einen Druckregler (107), der konfiguriert ist, um einen Druck des sekundären Fluids zu regulieren, und ein Ventil (511) umfasst, das konfiguriert ist, um einen Durchfluss des primären oder sekundären Fluids zu begrenzen, wobei die Steuerung (109) konfiguriert ist zum:
Erzeugen von Kalibrierungsdaten, die eine Beziehung zwischen einem Volumen des angesaugten oder abgegebenen primären Fluids und dem überwachten Durchflussparameter des sekundären Fluids definieren, durch:

Steuern des Druckreglers (107) und des Ventils (511), um ein oder mehrere bekannte Volumina des primären Fluids anzusaugen oder abzugeben;
Empfangen von jeweiligen Messungen des überwachten Durchflussparameters des sekundären Fluids, die dem einen oder mehreren bekannten Volumina des primären Fluids entsprechen, von dem Durchflussmesser (410); und
Zuordnen des einen oder der mehreren bekannten Volumina des primären Fluids zu den jeweiligen Messungen des überwachten Durchflussparameters des sekundären Fluids;

Empfangen von Messsignalen für den überwachten Durchflussparameter des sekundären Fluids von dem Durchflussmesser (410);

Bestimmen, unter Verwendung der erzeugten Kalibrierungsdaten, eines Volumens des angesaugten oder abgegebenen primären Fluids, basierend auf den empfangenen Messsignalen; und

Steuern, unter Verwendung des Druckreglers (107) und des Ventils (511), des Flusses des primären oder sekundären Fluids basierend auf dem bestimmten Volumen, um ein bestimmtes Volumen des primären Fluids anzusaugen oder abzugeben,

wobei der überwachte Durchflussparameter des sekundären Fluids ein verdrängtes Volumen des sekundären Fluids umfasst, und wobei die Steuerung (109) konfiguriert ist zum:

Bestimmen, wann das spezifische Volumen des primären Fluids angesaugt oder abgegeben wurde, basierend auf dem verdrängten Volumen des sekundären Fluids, das einen ersten vordefinierten Schwellenwert erreicht; und

Beenden des Flusses des primären oder sekundären Fluids basierend auf dieser Bestimmung.

2. Steuerung nach Anspruch 1, wobei die Steuerung (109) konfiguriert ist zum:

Bestimmen einer plötzlichen Änderung des überwachten Flussparameters des sekundären Fluids oder einer Messung des überwachten Flussparameters, die über oder unter einem zweiten vordefinierten Schwellenwert liegt, basierend auf den empfangenen Messsignalen; und

Beenden des Flusses von primärem oder sekundärem Fluid basierend auf dieser Bestimmung, wobei die Steuerung (109) optional konfiguriert ist, um eine Benachrichtigung zu erzeugen, die die erkannte plötzliche Änderung oder das Messen oberhalb/unterhalb der zweiten vordefinierten Schwelle angibt.

3. Steuerung (109) nach Anspruch 1, wobei die Steuerung (109) konfiguriert ist, den Fluss von primärem oder sekundärem Fluid basierend auf dem bestimmten Volumen zu steuern, um ein bestimmtes Volumen an primärem Fluid anzusaugen, und wobei die Steuerung (109) ferner konfiguriert ist, den Fluss von primärem oder sekundärem Fluid zu steuern, um das bestimmte Volumen an primärem Fluid abzugeben durch:

Steuern des Druckreglers (107) und des Ventils (511), um ein bekanntes Volumen an primärem Fluid anzusaugen;

Steuern des Druckreglers (107) und des Ventils (511) zur schrittweisen Abgabe des angesaugten primären Fluids über eine aufgezeichnete Anzahl von Abgabezyklen; und

Bestimmen eines Zyklusvolumens basierend auf dem bekannten Volumen des primären Fluids und der aufgezeichneten Anzahl von Dosierzyklen, wobei jeder Dosierzyklus eine bekannte Dauer aufweist, und wobei die Steuerung (109) ferner konfiguriert ist zum:

Bestimmen einer Abgabedauer, die erforderlich ist, um das spezifische Volumen des primären Fluids abzugeben, basierend auf der Zyklusdauer und dem Zyklusvolumen; und

Steuern des Druckreglers (107) und des Ventils (511), um das spezifische Volumen des primären Fluids für die bestimmte Abgabedauer abzugeben.

4. Steuerung (109) nach Anspruch 1, wobei die Steuerung (109) konfiguriert ist, um den Fluss des primären oder sekundären Fluids basierend auf dem bestimmten Volumen zu steuern, um ein spezifisches Volumen des primären Fluids anzusaugen, und wobei die Steuerung (109) ferner konfiguriert ist zum:

Steuern des Flusses von primärem oder sekundärem Fluid, um das spezifische Volumen des primären Fluids zu dosieren, durch:

Steuern des Druckreglers (107) und des Ventils (511), um ein bekanntes Volumen an primärem Fluid anzusaugen;

Steuern des Druckreglers (107) und des Ventils (511) zur schrittweisen Abgabe des angesaugten primären Fluids über eine aufgezeichnete Anzahl von Abgabezyklen; und

Bestimmen eines Zyklusvolumens basierend auf dem bekannten Volumen des primären Fluids und der aufgezeichneten Anzahl von Dosierzyklen;

Wiederholen dieser Schritte für eine Vielzahl von verschiedenen Zyklusdauern;

Verknüpfen des Zyklusvolumens mit jeder Zyklusdauer, um ferner Kalibrierungsdaten zu erzeugen;

Bestimmen, unter Verwendung der weiteren Kalibrierungsdaten, der Zyklusdauer, die erforderlich ist, um das spezifische Volumen des primären Fluids abzugeben; und

Steuern des Druckreglers (107) und des Ventils (511), um das spezifische Volumen des primären Fluids für die bestimmte Zyklusbedauer abzugeben.

5. Ansaug-/Abgabegerät, umfassend die Steuerung (109) nach einem der vorstehenden Ansprüche, wobei das Ansaug-/Abgabegerät bei Verwendung ein sekundäres Fluid in Arbeitskommunikation mit einem primären Fluid umfasst, wobei optional das primäre Fluid eine Flüssigkeit und das sekundäre Fluid ein Gas ist, wobei das Ansaug-/Abgabegerät ferner einen Durchflussmesser (410) umfasst, der konfiguriert ist, um den überwachten Durchflussparameter eines sekundären Fluids zu messen, einen Druckregler (107), der konfiguriert ist, um den Druck des sekundären Fluids zu regulieren, und ein Ventil (511), das konfiguriert ist, um den Fluss des primären oder sekundären Fluids zu begrenzen.

6. Ansaug-/Abgabegerät nach Anspruch 5, wobei das Ansaug-/Abgabegerät ferner eine Durchflussmesserschaltlogik (422) umfasst, die konfiguriert ist, um ein Ausgangssignal von dem Durchflussmesser (410) in das empfangene Messsignal umzuwandeln, sowie eine Ventilschaltlogik, die konfiguriert ist, um das Ventil (511) mit der Steuerung (109) zu verbinden.

7. Ansaug-/Abgabegerät nach Anspruch 5 oder 6, wobei das Ansaug-/Abgabegerät eine Vielzahl von primären Fluidkanälen (105) umfasst, durch die das primäre Fluid in das Ansaug-/Abgabegerät hinein oder aus ihm heraus fließen kann, und eine Vielzahl von entsprechenden sekundären Fluidkanälen (406), die mit den jeweiligen primären Fluidkanälen (105) verbunden sind, um die Arbeitskommunikation zwischen den primären und sekundären Fluiden bereitzustellen, wobei in Abhängigkeit von Anspruch 6 jeder primäre oder sekundäre Fluidkanal (105, 406) optional einen Filter (423) umfasst, der konfiguriert ist, um zu verhindern, dass das primäre Fluid den Durchflussmesser (410) berührt.

8. Ansaug-/Abgabegerät nach Anspruch 7, wobei die Vielzahl von primären Fluidkanälen (105) mit einem gemeinsamen primären Verteiler (114) verbunden ist, der konfiguriert ist, um das über die Vielzahl von primären Fluidkanälen (105) angesaugte primäre Fluid zu empfangen und zu enthalten, oder wobei jeder primäre Fluidkanal (105) eine Spitze (512) umfasst, die konfiguriert ist, um das über den jeweiligen primären Fluidkanal (105) angesaugte primäre Fluid zu empfangen und zu enthalten.

9. Ansaug-/Abgabegerät nach Anspruch 7 oder 8, wenn es von Anspruch 6 abhängt, wobei die Vielzahl von sekundären Fluidkanälen (406) mit einem gemeinsamen sekundären Verteiler (420) verbunden ist, der konfiguriert ist, um die Vielzahl von sekundären Fluidkanälen (406) mit dem Druckregler (107) zu verbinden.

10. Verfahren zum Steuern eines oder mehrerer von Ansaugung und Abgabe eines primären Fluids durch ein Ansaug-/Abgabegerät, wobei das Ansaug-/Abgabegerät ein sekundäres Fluid in Arbeitskommunikation mit dem primären Fluid, einen Durchflussmesser (410), der konfiguriert ist, um einen überwachten Durchflussparameter des sekundären Fluids zu messen, einen Druckregler (107), der konfiguriert ist, um einen Druck des sekundären Fluids zu regulieren, und ein Ventil (511), das konfiguriert ist, um einen Durchfluss des primären oder sekundären Fluids zu begrenzen, umfasst, wobei das Verfahren Folgendes umfasst:

Erzeugen von Kalibrierungsdaten, die eine Beziehung zwischen einem Volumen des angesaugten oder abgegebenen primären Fluids und dem überwachten Durchflussparameter des sekundären Fluids definieren, durch:

Steuern des Druckreglers (107) und des Ventils (511), um ein oder mehrere bekannte Volumina des primären Fluids anzusaugen oder abzugeben;
Empfangen von jeweiligen Messungen des überwachten Durchflussparameters des sekundären Fluids, die dem einen oder mehreren bekannten Volumina des primären Fluids entsprechen, von dem Durchflussmesser (410); und
Zuordnen des einen oder der mehreren bekannten Volumina des primären Fluids zu den jeweiligen Messungen des überwachten Durchflussparameters des sekundären Fluids;
Empfangen (629) von Messsignalen für den überwachten Durchflussparameter des sekundären Fluids von dem Durchflussmesser (410);
Bestimmen (630), unter Verwendung der erzeugten Kalibrierungsdaten, eines Volumens des angesaugten oder abgegebenen primären Fluids, basierend auf den empfangenen Messsignalen; und
Steuern (631), unter Verwendung des Druckreglers (107) und des Ventils (511), des Flusses des primären oder sekundären Fluids basierend auf dem bestimmten Volumen, um ein bestimmtes Volumen des primären Fluids anzusaugen oder abzugeben (632),
wobei der überwachte Flussparameter des sekundären Fluids ein verdrängtes Volumen des sekundären Fluids umfasst, und wobei das Verfahren ferner Folgendes umfasst:

Bestimmen, wann das spezifische Volumen des primären Fluids angesaugt oder abgegeben wurde, basierend auf dem verdrängten Volumen des sekundären Fluids, das einen ersten vordefinierten Schwellenwert erreicht; und Beenden des Flusses des primären oder sekundären Fluids basierend auf dieser Bestimmung.

11. Computerprogramm, umfassend Computercode, der zur Durchführung des Verfahrens nach Anspruch 10 konfiguriert ist.

## Revendications

1. Dispositif de commande (109) configuré pour commander une ou plusieurs opérations d'aspiration et de distribution d'un fluide primaire au moyen d'un appareil d'aspiration-distribution, l'appareil d'aspiration-distribution comprenant un fluide secondaire en communication fonctionnelle avec le fluide primaire, un débitmètre (410) configuré pour mesurer un paramètre de débit surveillé du fluide secondaire, un régulateur de pression (107) configuré pour réguler la pression du fluide secondaire et une vanne (511) configurée pour limiter le débit du fluide primaire ou secondaire, dans lequel le dispositif de commande (109) est configuré pour :
générer des données d'étalonnage définissant une relation entre un volume de fluide primaire aspiré ou distribué et le paramètre de débit surveillé du fluide secondaire par :

   la commande du régulateur de pression (107) et de la vanne (511) pour aspirer ou distribuer un ou plusieurs volumes connus de fluide primaire ;
   la réception, à partir du débitmètre (410), des mesures respectives du paramètre de débit surveillé du fluide secondaire correspondant aux un ou plusieurs volumes connus de fluide primaire ; et
   l'association des un ou plusieurs volumes connus de fluide primaire aux mesures respectives du paramètre de débit surveillé du fluide secondaire ;
   recevoir, à partir du débitmètre (410), un signal de mesure pour le paramètre de débit surveillé du fluide secondaire ;
   déterminer, à l'aide des données d'étalonnage générées, un volume de fluide primaire aspiré ou distribué sur la base du signal de mesure reçu ; et
   commander, à l'aide du régulateur de pression (107) et de la vanne (511), le débit du fluide primaire ou secondaire sur la base du volume déterminé pour aspirer ou distribuer un volume spécifique de fluide primaire,

dans lequel le paramètre de débit surveillé du fluide secondaire comprend un volume déplacé de fluide secondaire, et dans lequel le dispositif de commande (109) est configuré pour :

   déterminer à quel moment le volume spécifique de liquide primaire a été aspiré ou distribué sur la base du volume déplacé de liquide secondaire atteignant un premier seuil prédéfini ; et
   interrompre le flux de fluide primaire ou secondaire sur la base de ladite détermination.

2. Dispositif de commande selon la revendication 1, dans lequel le dispositif de commande (109) est configuré pour :

   déterminer une variation soudaine du paramètre de débit surveillé du fluide secondaire, ou une mesure du paramètre de débit surveillé supérieure ou inférieure à un second seuil prédéfini, sur la base du signal de mesure reçu ; et interrompre le flux de fluide primaire ou secondaire sur la base de ladite détermination, éventuellement dans lequel le dispositif de commande (109) est configuré pour générer une notification indiquant le changement soudain détecté ou la mesure au-dessus/en dessous du second seuil prédéfini.

3. Dispositif de commande (109) selon la revendication 1, dans lequel le dispositif de commande (109) est configuré pour commander le débit de fluide primaire ou secondaire sur la base du volume déterminé pour aspirer un volume spécifique de fluide primaire, et dans lequel le dispositif de commande (109) est également configuré pour commander le débit de fluide primaire ou secondaire afin de distribuer le volume spécifique de fluide primaire par :

   la commande du régulateur de pression (107) et de la vanne (511) pour aspirer un volume connu de fluide primaire ;
   la commande du régulateur de pression (107) et de la vanne (511) pour distribuer progressivement le fluide primaire aspiré sur un nombre enregistré de cycles de distribution ; et
   la détermination d'un volume de cycle basé sur le volume connu de fluide primaire et le nombre enregistré de cycles de distribution, dans lequel chaque cycle de distribution a une durée connue, et le dispositif de commande (109) est également configuré pour :

      déterminer la durée de distribution nécessaire pour distribuer le volume spécifique de fluide primaire sur la base de la durée et du volume du cycle ; et

commander le régulateur de pression (107) et la vanne (511) pour distribuer le volume spécifique de fluide primaire pendant la durée de distribution déterminée.

**4.** Dispositif de commande (109) selon la revendication 1, dans lequel le dispositif de commande (109) est configuré pour commander le débit de fluide primaire ou secondaire sur la base du volume déterminé pour aspirer un volume spécifique de fluide primaire, et dans lequel le dispositif de commande (109) est également configuré pour :

commander le débit du fluide primaire ou secondaire pour distribuer le volume spécifique de fluide primaire par :

la commande du régulateur de pression (107) et de la vanne (511) pour aspirer un volume connu de fluide primaire ;

la commande du régulateur de pression (107) et de la vanne (511) pour distribuer progressivement le fluide primaire aspiré sur un nombre enregistré de cycles de distribution ; et

la détermination d'un volume de cycle basé sur le volume connu de fluide primaire et le nombre enregistré de cycles de distribution ;

répéter ces étapes pour une pluralité de durées de cycle différentes ;

associer le volume du cycle à la durée de chaque cycle pour générer des données d'étalonnage supplémentaires ;

déterminer, à l'aide des données d'étalonnage supplémentaires, la durée du cycle nécessaire pour distribuer le volume spécifique de fluide primaire ; et

commander le régulateur de pression (107) et la vanne (511) pour distribuer le volume spécifique de fluide primaire pendant la durée du cycle déterminée.

**5.** Appareil d'aspiration-distribution comprenant le dispositif de commande (109) selon une quelconque revendication précédente, l'appareil d'aspiration-distribution comprenant, en utilisation, un fluide secondaire en communication fonctionnelle avec un fluide primaire, éventuellement dans lequel le fluide primaire est un liquide et le fluide secondaire un gaz, dans lequel l'appareil d'aspiration-distribution comprend également un débitmètre (410) configuré pour mesurer le paramètre de débit surveillé d'un fluide secondaire, un régulateur de pression (107) configuré pour réguler la pression du fluide secondaire et une vanne (511) configurée pour limiter le débit du fluide primaire ou secondaire.

**6.** Appareil d'aspiration-distribution selon la revendication 5, dans lequel appareil d'aspiration-distribution comprend également le circuit de débitmètre (422) configuré pour convertir un signal de sortie du débitmètre (410) au signal de mesure reçu et le circuit de vanne configuré pour interfacer la vanne (511) avec le dispositif de commande (109).

**7.** Appareil d'aspiration-distribution selon la revendication 5 ou 6, dans lequel l'appareil d'aspiration-distribution comprend une pluralité de canaux de fluide primaires (105) à travers lesquels le fluide primaire peut entrer ou sortir de l'appareil d'aspiration-distribution, et une pluralité de canaux de fluide secondaires correspondants (406) connectés aux canaux de fluide primaires respectifs (105) pour assurer la communication de fonctionnement entre les fluides primaires et secondaires, dans lequel, lorsqu'il dépend de la revendication 6, chaque canal de fluide primaire ou secondaire (105, 406) comprend éventuellement un filtre (423) configuré pour empêcher le fluide primaire d'entrer en contact avec le débitmètre (410).

**8.** Appareil d'aspiration-distribution selon la revendication 7, dans lequel la pluralité de canaux de fluide primaires (105) sont connectés à un collecteur primaire commun (114) configuré pour recevoir et contenir le fluide primaire aspiré par le biais de la pluralité de canaux de fluide primaires (105), ou dans lequel chaque canal de fluide primaire (105) comprend une pointe (512) configurée pour recevoir et contenir le fluide primaire aspiré par le biais du canal de fluide primaire respectif (105).

**9.** Appareil d'aspiration-distribution selon la revendication 7 ou 8 lorsqu'il dépend de la revendication 6, dans lequel la pluralité de canaux de fluide secondaires (406) sont connectés à un collecteur secondaire commun (420) configuré pour interfacer la pluralité de canaux de fluide secondaires (406) avec le régulateur de pression (107).

**10.** Procédé de commande d'une ou de plusieurs opérations d'aspiration et de distribution d'un fluide primaire au moyen d'un appareil d'aspiration-distribution, l'appareil d'aspiration-distribution comprenant un fluide secondaire en communication fonctionnelle avec le fluide primaire, un débitmètre (410) configuré pour mesurer un paramètre de débit surveillé du fluide secondaire, un régulateur de pression (107) configuré pour réguler la pression du fluide secondaire et une vanne (511) configurée pour limiter le débit du fluide primaire ou secondaire, dans lequel le procédé comprend :

la génération de données d'étalonnage définissant une relation entre un volume de fluide primaire aspiré ou distribué et le paramètre de débit surveillé du fluide secondaire par :

la commande du régulateur de pression (107) et de la vanne (511) pour aspirer ou distribuer un ou plusieurs volumes connus de fluide primaire ;

la réception, à partir du débitmètre (410), des mesures respectives du paramètre de débit surveillé du fluide secondaire correspondant aux un ou plusieurs volumes connus de fluide primaire ; et

l'association des un ou plusieurs volumes connus de fluide primaire aux mesures respectives du paramètre de débit surveillé du fluide secondaire ;

la réception (629), à partir du débitmètre (410), de la signalisation de mesure pour le paramètre de débit surveillé du fluide secondaire ;

la détermination (630), à l'aide des données d'étalonnage générées, d'un volume de fluide primaire aspiré ou distribué sur la base du signal de mesure reçu ; et

la commande (631), à l'aide du régulateur de pression (107) et de la vanne (511), du débit de fluide primaire ou secondaire sur la base du volume déterminé à aspirer ou à distribuer (632) un volume spécifique de fluide primaire, dans lequel le paramètre d'écoulement surveillé du fluide secondaire comprend un volume déplacé de fluide secondaire, et dans lequel le procédé comprend également :

la détermination du moment où le volume spécifique de fluide primaire a été aspiré ou distribué sur la base du volume déplacé de fluide secondaire atteignant un premier seuil prédéfini ; et

l'interruption du flux de fluide primaire ou secondaire sur la base de ladite détermination.

11. Programme informatique comprenant un code informatique configuré pour réaliser le procédé selon la revendication 10.

Figure 1

Dispense Calibration Data
Tip1="6.870    11.220, 23.120, 40.000, 85.000
Tip2="6.760    11.880, 23.180, 40.000, 85.000
Tip3="6.600    11.530, 22.930, 40.000, 85.000
Tip4="7.000    11.420, 22.500, 40.000, 82.500
Tip5="6.860    11.320, 23.500, 40.000, 85.000
Tip6="6.580    11.210, 22.560, 40.000, 80.000
Tip7="6.580    11.320, 23.000, 40.000, 85.000
Tip8="6.700    11.320, 22.810, 40.000, 85.000

Dispense calibration

Tip 1
Tip 2
Tip 3
Tip 4
Tip 5
Tip 6
Tip 7
Tip 8

Dispense volume (µl)

Valve opening time (ms)

## Figure 2

## Figure 3a

## Figure 3b

Figure 4

Figure 5a

Figure 5b

511

527

526

528

Figure 5c

Figure 5d

| Receive measurement signalling for monitored flow parameter of secondary fluid | 629 |

| Determine, using calibration data, volume of aspirated or dispensed primary fluid based on received measurement signalling | 630 |

| Control flow of primary or secondary fluid based on determined volume | 631 |

| Aspirate or dispense specific volume of primary fluid | 632 |

Figure 6

733

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016273951 A1
- US 2004020938 A1
- US 2012104040 A1

**Non-patent literature cited in the description**

- **LEE, D. et al.** Development of the pipetting error sensor. *Sensors and Actuators B: Chemical*, 24 November 2006, vol. 119 (1), 150-158